# EUROPEAN PATENT SPECIFICATION

(11) **EP 3 259 199 B1**
(45) Date of publication and mention of the grant of the patent: **02.10.2019**
(21) Application number: 15710703.8
(22) Date of filing: 10.03.2015
(51) Int. Cl.: B65D 35/22, B65D 35/24, B65D 35/28, B65D 47/10, A61C 9/00, B05C 17/005

(54) **MULTI CHAMBER DELIVERY SYSTEM**
ABGABESYSTEM MIT MEHREREN KAMMERN
SYSTÈME DE DISTRIBUTION À CHAMBRES MULTIPLES

(43) Date of publication of application: 27.12.2017
(73) Proprietor: Colgate-Palmolive Company, New York, NY 10022 (US)
(72) Inventor: DEMAREST, Scott, Basking Ridge, New Jersey 07920 (US); XU, Guofeng, Plainsboro, New Jersey 08536 (US); MOSKOVICH, Robert, Manakin-Sabot, VA 23103 (US)
(74) Representative: Schicker, Silvia
(86) International application number: PCT/US2015/019598
(87) International publication number: WO 2016/144326

(56) References cited:
- EP-A1- 1 136 091
- WO-A1-00/10423
- US-A1- 2007 253 761
- US-A1- 2012 267 394

## Description

### BACKGROUND

Sachets, also known as pouches or packets, are known in the art. Sachets are small packets that are used for supplying small doses of a product. These are used to dispense single or a small number of doses of adhesives, lubricants, medicines, cosmetics, shampoos, conditioners, liquid soaps, lotions or dentifrices, and the like. In some instances a single dose is a sample amount. Thus, in some instances the sachets will be used to deliver a single dose of a single substance. However, in other instances they will be used to dispense doses of two different substances. In an example, two or more different substances may each be stored in a single sachet that keeps the substances separate. Accordingly, dual chamber, or multi-chamber sachets are provided for storing different substances.

In instances of delivery of two different substances, sometimes these substances must be delivered substantially uniformly. That is, each of the substances should be dispensed in about equal amounts. This is needed for the effective use of the substances being dispensed. Meanwhile, in some instances, the substances include components that are reactive and must be dispensed separately, such as in a certain reactive ratio, for mixing after dispensing. Some medications also must be used in a certain or specific ratio. The same is the case for a dentifrice that is comprised of two reactive or non-compatible components, for example, a tooth-whitening component and a coloring component. These types of substances need sachets that not only keep their respective components separate, for example, during storage (e.g., before use), but that also reliably dispense the components from each sachet or chamber in substantially uniform and/or predetermined amounts or proportions. However, conventional sachets do not provide for the contents therein to be segregated from each other during storage and then dispensed in a usable, predetermined, ratio as a mixture. An improved sachet that overcomes the limitations of conventional sachets would be a welcome addition to the art.

US 2012 / 0 267 394 A1 discloses a dispensing device comprising a rack and a pinion driven by a set of worm screws. A cartridge comprising two separate pouches is placed within the rack assembly, which may include rollers for assisting in the extrusion of dental material from the cartridge.

US 2007 / 0 253 761 A1 discloses a manually squeezed dispenser for expelling a product therefrom.

From WO 00 / 10 423, a dispensing device attached to a pair of valved containers housed in a case is known.

Moreover, from EP 1 136 091 A1 a closure-piece is known which seals a free end of a canula, wherein a predetermined braking point is provided between the closure-piece and the canula.

### BRIEF SUMMARY

The invention relates to an oral care product applicator according to claim 1. Further embodiments of the invention can be gathered from the dependent claims.

A product dispenser may be used for oral care products. The oral care product dispenser includes at least two storage chambers, a mixing chamber, a dispensing nozzle in fluidic communication with the mixing chamber and at least one seal that keeps contents stored in the at least two storage chambers separated during storage. The mixing chamber receives and sufficiently mixes contents from the at least two storage chambers during dispensing.

In an embodiment of the invention, there is a product applicator that may be used with oral care products. The oral care product applicator comprises a housing having a volume for receiving a dispenser, a dispenser disposed in the housing, and an actuator for manipulating the dispenser. The dispenser includes at least two storage chambers, a mixing chamber that receives and sufficiently mixes contents from the at least two storage chambers, a dispensing nozzle in fluid communication with the mixing chamber, and at least one seal that keeps contents stored in the at least two storage chambers from exiting the dispenser.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
**FIG. 1** is a cross-sectional view of a product dispenser of an embodiment.
**FIG. 2** is a perspective view of the product dispenser of FIG. 1 with the storage chambers spread apart;
**FIG. 3A** is a perspective view of a product dispenser of an embodiment;
**FIG. 3B** is a cross-sectional, perspective, close-up view of a mixing chamber and nozzle of the product dispenser of FIG. 3A;
**FIG. 4** is a perspective view of an oral care product dispenser of an embodiment and illustrates a roller being used to dispense mixed contents from the dispenser;
**FIG. 5** is a cross-sectional view of an oral care product applicator of an embodiment;
**FIG. 6** is a perspective view of an oral care product dispenser an embodiment; and
**FIG. 7** is a perspective view of an oral care product applicator of an embodiment.

### DETAILED DESCRIPTION

The following description of the preferred embodiments is merely exemplary in nature and is in no way intended to limit the invention, its application, or uses.

As used throughout, ranges are used as shorthand for describing each and every value that is within the range. Any value within the range can be selected as the terminus of the range. In the event of a conflict in a definition in the present disclosure and that of a cited reference, the present disclosure controls.

As used herein, the terms "sufficiently mix" and "sufficiently mixed" mean an amount or degree of mixing of components such that the components contact each other and could, can, or will react with each other. In various implementations where the components are reactive in manner making them incompatible for storage before use in contact with each other, the components may be segregated from one another when not in use; i.e., prevented from sufficiently mixing when not in use. As used here, the term "incompatible" to describe components of a formulation, means that over time (e.g., during storage before use), the mixing of the components deemed "incompatible" degrades one or more desired quality of the combined formulation.

Embodiments described herein generally provide for the delivery of two reactive and/or incompatible components (A and B) and for sufficiently mixing the components into a formulation, such as a ready-to-use formulation, just prior to use. Multiple components, such as components A and B, are packaged in separate storage chambers of a dispenser, such as in separate sachets of a dual chamber sachet. Each storage chamber is separated from the other by a seal, such as a frangible seal. A mixing chamber, through which components A and B may flow, serves or functions to sufficiently mix the components into, for example, a ready-to-use formulation, such as a homogenous mixture. The mixing chamber may be configured with a tortuous path and/or any other geometry and/or features defining a conduit through which the components from the storage chamber may flow and sufficiently mix.

Form/Fill/Seal equipment may be used to manufacture embodiments of a dispenser that includes separate storage chambers, such as a dual sachet, and a mixing chamber. This manufacturing process is economical and could also be used to produce blown tubes and thermoformed containers for use as the storage chambers. For example, a dispenser may include a container with thermoformed dual storage chambers in place of sachets. In one embodiment, a dispensing nozzle is connected to or comprises part of the mixing chamber. A seal on the end of the dispensing nozzle of the mixing chamber can be removed by the consumer. In an embodiment, squeezing the two storage chambers, such as two sachets, together will fracture a frangible seal in each chamber and force components A and B into the mixing chamber where they are combined and sufficiently mixed to form a ready-to-use formulation before exiting the dispensing nozzle.

Another embodiment uses a dual sachet as the two storage chambers, in connection with a mixing chamber that may be used in conjunction with an applicator that includes an actuator and a user interface for controlling the actuator. A housing of the applicator may be opened, and a dispenser, such as the dual sachet with mixing chamber, can be positioned inside. For example, a dispensing nozzle may be positioned at one end of the applicator and an anchor for attaching the ends of the dispenser's sachets may be included at the other end. When the cover is closed and the consumer actuates the system by manipulating the actuator, a homogenous mixture of components A and B, each stored in a separate sachet, may be formed in the mixing chamber as a ready-to-use formulation, which may be dispensed through the dispensing nozzle.

The actuator may approximately evenly squeeze the sachets and force each of the components out of each of the sachets and through the mixing chamber. The actuator may be one or more of a roller wheel(s) that squeezes the sachets, starting at an end opposing the dispensing nozzle, a clamping platen that exerts pressure on both sachets, or a rotating component that twists the sachets, to name a few possible implementations.

The actuator may be controlled by a user interface. In an example, the user interface may be a sliding button, push button or rotating knob and may communicate with a ratchet track, gear drive, cam assembly or other mechanisms known in art.

Transparent portions, such as viewing windows, can be designed into the applicator and/or the product dispenser so that the user can see, for example, the contents contained in the storage chambers (e.g., the sachets) or in the mixing chamber. In an example, the viewing windows may be configured to provide the user with the ability to see components A and B separately, and then again when the components have been combined, for example, as the ready-to-use formulation in the mixing chamber. Consumer research has shown that viewing the components and providing a visual cue that they have been mixed correctly is perceived positively and builds confidence.

In some embodiments, the dispenser may be designed to be single use. For example, in an embodiment, the two storage chambers or sachets may be disposed of after a single application, which promotes good hygiene. However, it is feasible to size the two storage chambers to contain enough of the components for multiple applications of a ready-to-use mixed formulation. Moreover, the actuator in combination with the user interface can be designed to meter the correct amount of contents and product formulation for each application.

Embodiments described herein may be used for storing, transporting and dispensing materials, such as gels, powders, solids, and may also be used for transporting and dispensing liquids and pastes of varying viscosities. In some embodiments, the two storage chambers may be used to store different forms of materials, such as a solid in one chamber and a liquid in the other chamber. In the case of an oral care teeth whitening product, any of the embodiments described herein may be used to mix and apply components A and B, for example, as components of the oral care teeth whitening system, either directly to the teeth or into a tray or other receptacle. In an oral care teeth whitening system, whitening ingredients, such as hydrogen peroxide, react with coloring ingredients, such as blue dye, which may be used as decorative colorant in a paste, and cause the blue color to fade. Accordingly, in an example, component A may include the hydrogen peroxide and component B may include the blue dye. In another example, component A may include a base formulation and component B may include an enzyme or a catalyst such that when combined with component A, produces a mixture that can deliver a desired benefit, such as a whitening benefit, a sensitivity reduction benefit, a plague reduction benefit. In a further example, component A may include a substrate and component B may include an enzyme, e.g., glucose and glucose oxidase.

Embodiments of the invention will now be described with reference to the drawings.

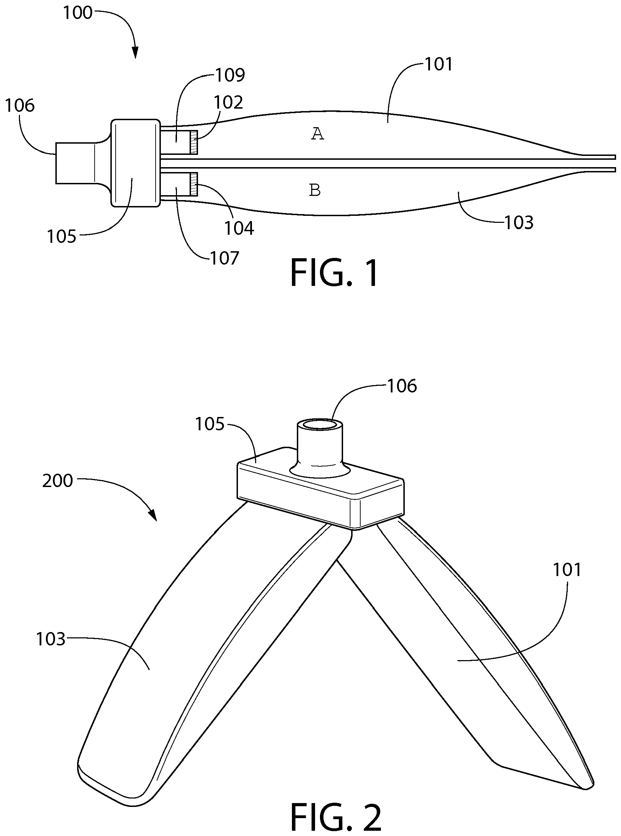

**FIG. 1** is a cross-sectional view of a product dispenser 100, where the product may be an oral care product. The dispenser may include two storage chambers, 101 and 103 (holding contents A and contents B), a mixing chamber 105 that receives and sufficiently mixes contents from the two storage chambers, and a dispensing nozzle 106 in fluidic communication with the mixing chamber. In other embodiments, more than two storage chambers 101 and 103 may be included.

In an example, the contents comprise first contents disposed in a first one of the at least two storage chambers, second contents disposed in a second one of the at least two storage chambers. At least one of the first and the second contents may comprise an oral care product. In an example, contents from each of the storage chamber are mixed in the mixing chamber. The dispensing nozzle receives the mixed contents from the mixing chamber and the mixed contents may include an oral care product.

A seal 102 and a seal 104 keep contents stored in the two storage chambers separated during storage. In the embodiment shown, the seal 102 may be disposed between the mixing chamber 105 and the storage chamber 101, on the end of the inlet 109, and the seal 104 may be disposed between the mixing chamber 105 and the storage chamber 103, on the end of the inlet 107. Each of the seals 102 and 104 prevents the contents of its storage chamber (101 or 103) from entering the mixing chamber 105 until each seal is fractured or broken or otherwise compromised. In some embodiments, there may be a single seal instead of two seals as shown. For example, in such embodiments, the inlets 107 and 109 may merge inside the mixing chamber 105 to form a single inlet into the mixing chamber 105, and the single seal may cover the single inlet. In some embodiments, a single seal may be formed in one of the storage chambers (101 or 103) by heat, such as via a heat plate, ultrasonic welding, etc.

In various embodiments, a seal may be made of a polymer film or a metal foil. In an embodiment, a seal may be removed or punctured by the user. In an embodiment, a seal may be a frangible seal. In such an embodiment, the frangible seal may include or may be made of a material that fractures or otherwise compromises upon exposure to sufficient force or pressure, such as the force or pressure exerted on the seal by the contents of one or both of the storage chambers 101 and 103 when external force or pressure is exerted on one or both of the storage chambers 101 and 103. Upon fracturing, puncturing, removing, or otherwise compromising the seal, a pathway is exposed that fluidically couples the mixing chamber 105 and the storage chambers 101 and 103. When the seal is no longer a barrier, the two contents in the two storage chambers 101 and 103 may flow via a respective one of the inlets 109 and 107 and enter the mixing chamber 105.

Each of the at least two storage chambers 101 and 103 may be connected to a respective one of the inlets 109 and 107, extending from the mixing chamber 105. As shown in FIG. 2, the first storage chamber 101 and the second storage chamber 103 may each be a portion of a dual chamber sachet dispenser 200 and may be formed separate from one another. The storage chambers 101 and 103 may be designed such that they will withstand fracture when exposed to a pressure or force that is sufficient to fracture a seal, such as the seal 102 and the seal 104. A storage chamber may include an internal volume defined by outer walls. These walls can be a monolayer or a multilayer film structure. Suitable films for the monolayer or multilayer can be selected from polyethylene (PET), aluminum foil, terephthalate; polyacrylonitrile and polystyrene resin (Barex); biaxially oriented polypropylene (BOPP); low density polyethylene (LDPE); polyethylene (PE); and ethylene-vinyl alcohol copolymer (EVOH) nylon.

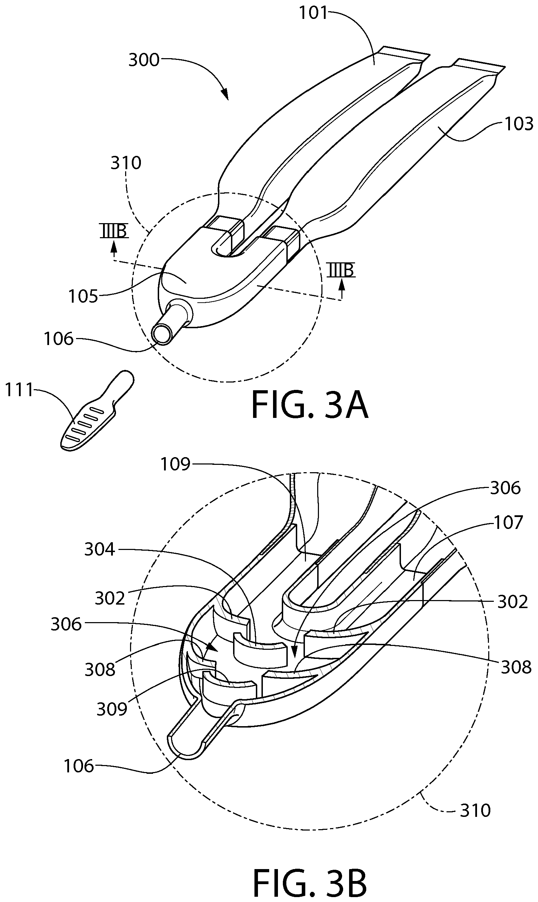

**FIG. 3A** is a perspective view of another embodiment of a product dispenser 300, where the product may be an oral care product. As shown in the embodiment of FIG. 3A, the storage chamber 101 and the storage chamber 103 may be configured to lie side by side, such that pressure or force may be easily applied to either of the storage chamber 101 or the storage chamber 103 without affecting the other, if desired. In the embodiment of FIG. 3A, the mixing chamber 105 and the inlets 107 and 109 form a U-shape, with the storage chamber 101 attaching to one arm of the U, the storage chamber 103 attaching to the other arm of the U, and the dispensing nozzle 106 connected to the bottom curve of the U. The dispensing nozzle 106 may be blocked and unblocked by a tip 111 that is dimensioned to fit partially inside of the dispensing nozzle 106. In various embodiments the tip 111 may be a snap-off tip 111 that is manufactured as a removable part of the dispensing nozzle 106.

Referring now to the zoomed-in view 310 in **FIG. 3B****,** the contents of each of the first storage chamber 101 and the second storage chamber 103 may be kept partially or fully segregated or separated from one another by a seal (not shown) in the mixing chamber 105 or by two seals (not shown) in the inlet 109 and the inlet 107. In various embodiments, a single seal (not shown) may be located, for example, between the sidewalls 302 at the entrance to the mixing chamber 105 through which the contents of the storage chambers 101 and 103 flow. In other embodiments, two seals (not shown) may be located in the inlets 107 and 109 through which contents of the storage chambers 101 and 103 flow before reaching the mixing chamber 105. While not limited to any particular location, the seal(s) may be placed at a location(s) that prevents the contents from one, or both, of the storage chambers 101 and 103 from exiting the storage chambers; or the seal(s) may be placed at a location(s) that prevents the contents from one storage chamber from mixing with the contents of the other storage chamber; or the seal(s) may be placed at a location(s) that prevents the contents from one, or both, of the storage chambers 101 and 103 from entering the mixing chamber 105, among other possibilities. In various embodiments, the seal or seals may be frangible seals, such as seals that break when a sufficient amount of pressure from a liquid content(s) or from air is applied to them.

As illustrated in the zoomed-in view 310 of the example in FIG. 3B, the mixing chamber 105 includes a mixing volume 306, which may be in the form of a manifold comprising a plurality of baffles defined by sidewalls 302, 304, 308, 309 extending from inner surface portions of the mixing chamber 105. The mixing volume 306 of the mixing chamber 105 is connected to the two inlets 107 and 109, which couple to a respective one of the two storage chambers 101 and 103.

It is noted that either one, or all, of the storage chambers 101 and 103 may be detachably connected to the mixing chamber 105, such as may be the case for single-use storage chambers. Also, as noted above, in alternative embodiments, more than two inlets may couple more than two storage chambers to the mixing chamber 105, such that three or more different contents or ingredients are mixed by the mixing chamber 105.

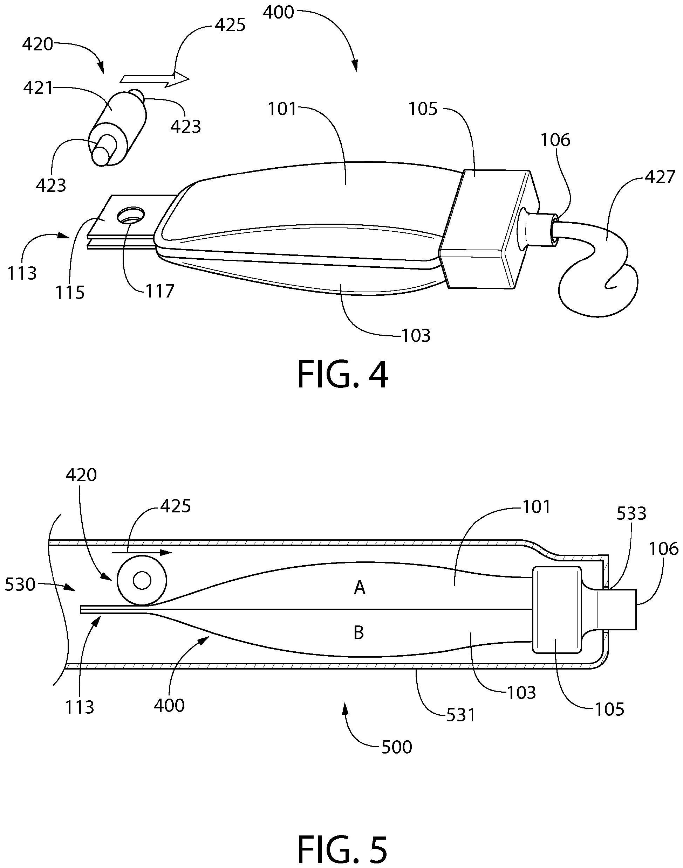

**FIG. 4** is a perspective view of an example of a product dispenser 400, where the product may be an oral care product, and illustrates a roller 420 (not to scale) that may be used to dispense mixed contents or a mixed formulation from the dispenser 400. As shown by the dispenser 400 of FIG. 4, which may include any of the features of the dispensers 100, 200 or 300 so far described, at least one of the two storage chambers 101 and 103 may include an anchor portion 113. Anchor portion 113 includes a surface 115 and a slot or hole 117 formed through surface 115. In various embodiments, the anchor portion 113 engages with a pin or other part of a product applicator (e.g., oral care product applicator 500 shown in FIG. 5) in order to capture and hold the dispenser 400 and keep it in place. Once anchored in the applicator 500, an actuator, such as roller 420, may be applied to the dispenser 400 (e.g., rolled in a direction 425), such that contents from either or both of the two storage chambers 101 and 103 are pressurized to a pressure great enough to fracture, break or otherwise compromise a seal(s), such as a frangible seal, and such that the contents are squeezed into the mixing chamber 105, where they are sufficiently mixed to form a mixed formulation 427, which exits the dispensing nozzle 106. In some embodiments, the mixed formulation 427 is an oral care product, such as a whitening tooth gel formulation.

The roller 420 may include a surface 421 that is brought into contact with at least one of the two storage chambers 101 and 103, and moved in the direction 425. To keep the actuator aligned, the roller may include guiders 423 which may be accepted along a corresponding track or slot portion (not shown) of the product applicator 500.

FIG. 5 is a cross-sectional view of a product applicator 500 that contains and operates the dispenser 400. The product applicator 500 includes a housing 531, and a volume 530 for receiving a dispenser, such as an oral care product dispenser 400, and an opening 533 through which the dispenser's dispensing nozzle 106 may protrude. Thus, dispenser 400 may be disposed in the housing 531 as shown in FIG. 5. The product applicator 500 may further include an actuator, such as the roller 420 (not to scale), for manipulating the dispenser 400 so as to cause a mixture of the contents contained in the storage chamber 101 and the contents contained in the storage chamber 103 to extrude from the dispensing nozzle 106. The product applicator 500 may contain and operate the dispenser 400 of FIG. 4, as shown, or any similar dispenser, such as dispenser 100 of FIG. 1, dispenser 200 of FIG. 2, or dispenser 300 of FIG. 3.

As discussed above, the actuator may be the roller 420 that may be placed in mechanical communication with the storage chamber 101. As noted above, when the roller 420 is moved in direction 425, it exerts force or pressure on (e.g., squeezes) the storage chamber 101, causing the contents A of the storage chamber 101 to flow into the mixing chamber 105. Similarly and at the same time the storage chamber 101 exerts force or pressure on (e.g., squeezes) the storage chamber 103 (in conjunction with the housing 531), causing the contents B of the storage chamber 103 to flow into the mixing chamber 105. In various embodiments, other actuators may be used. For example, a second roller (not shown) that contacts the storage chamber 103, and that moves the direction 425 on a path approximately parallel to and in tandem with the movement of the roller 420 may be used. In another example, the actuator may be a rotating element (not shown) that may be placed in mechanical communication with the two storage chambers 101 and 103, and the two storage chambers 101 and 103 may be configured to rotate in response to movement of the rotating element. In other words, the two storage chambers 101 and 103 may be configured such that they twist around one another as the rotating element rotates. As a result of the twisting, the contents of the storage chambers 101 and 103 may be pressurized so as to fracture a seal(s), and so that the contents A and B may flow into the mixing chamber 105.

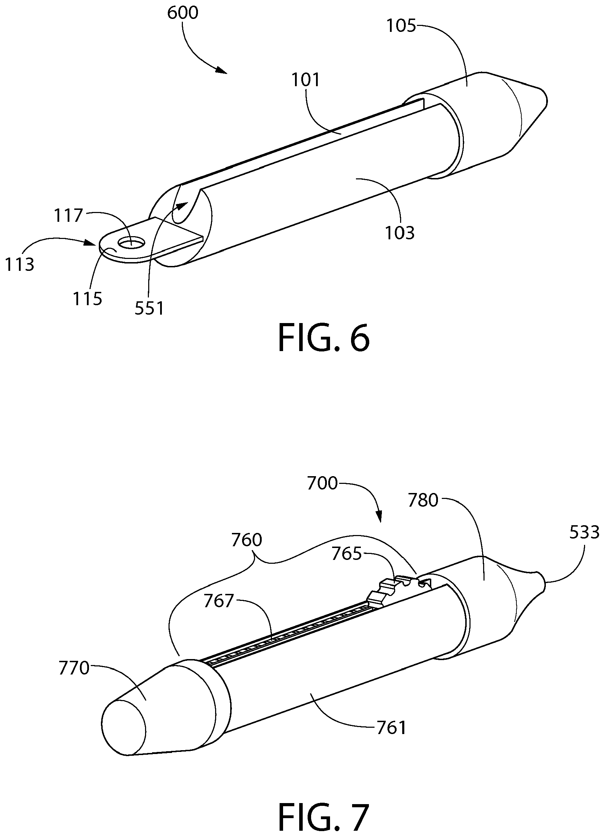

**FIG. 6** is a perspective view of another example of a product dispenser 600. As shown in FIG. 6, the product dispenser 600 includes a first storage chamber 101 and a second storage chamber 103, which may be a thermoformed unit having an internal separator wall that separates the first storage chamber and the second storage chamber. Distal ends of the first and second storage chambers may connect with inlets (not visible) of a mixing chamber 105. A frangible seal (not visible) may be located in the inlets to keep contents in the first and second storage chambers separated. Dispenser 600 includes an anchor portion 113. Anchor portion 113 includes a surface 115 and a slot or hole 117 formed through surface 115. Anchor portion 113 engages with a pin or other part of a product applicator 700 (e.g., oral care product applicator 700 shown in FIG. 7) in order to capture and hold the dispenser 600 and keep it in place. Once anchored in the applicator 700, an actuator, such as wedge, platen or piston, may be controlled by user interface 760 (shown in FIG. 7) to traverse a length of the dispenser 600, such as in a distal direction along groove 551. In an embodiment, as the actuator traverses along groove 551, it may be configured with a geometry that allows it to cause walls of chambers 101 and 103 to collapse, such that contents from either or both of the two storage chambers 101 and 103 are pressurized to a pressure great enough to fracture, break or otherwise compromise a seal(s), such as frangible seals located in the inlets to the mixing chamber. Accordingly, contents are squeezed out of their respective storage chambers and into the mixing chamber 105, where they are sufficiently mixed to form a mixed formulation, which exits the dispensing nozzle at, for example, the distal end of mixing chamber 105.

**FIG. 7** shows an external perspective view of an embodiment of an oral-care product applicator 700. Oral-care product applicator 700 may include some or all of the features of the product applicator 500 of FIG. 5. The oral care product applicator 700 includes a housing 761 having a volume in which a dispenser, such as the dispenser 600 may be placed. One end 770 of the applicator 700 may include an anchor (not shown) which accepts the anchor portion 113 of the dispenser 600, for example by engaging the hole 117 with a pin or hook (not shown) that is inside of the end 770. Another end of the applicator 700 may include a detachable end-cap 780 that is removed in order to insert the dispenser 600 into the housing 761. When attached back on housing 761, the detachable end-cap 780 accepts the mixing chamber 105 of the dispenser 600 and has a distal opening 533 through which the dispenser's dispensing nozzle 106 may protrude. In some embodiments, the end-cap 780 comprises the dispensing nozzle 106.

The oral-care product applicator 700 includes a user interface 760 that may be employed by a user to activate or move an actuator (not visible) disposed in the housing 761, such as the roller 420, a wedge, a platen or a piston, as described above. While not limited to any particular embodiment, in the example shown in FIG. 7, the user interface 760 may include a sliding button 765 that moves along a ratchet track 767 toward the removable end-cap 780. The sliding button 765 may include pins or teeth (not visible) that engage the ratchet track 767 and preclude or prevent the sliding button 765 from moving back away from the removable end-cap 780. As the sliding button moves distally toward the detachable end-cap 780, it actuates an actuator, such as roller 420, wedge, platen or piston to move in the same direction. Thus, with dispenser 600 disposed within the applicator 700, the actuator traverses a length of the dispenser 600 toward the mixing chamber 105. In an example, movement of the sliding button 765 along ratchet track 767 causes movement of an actuator within housing 761 along groove 551 of dispenser 600. Such movement causes the actuator to apply pressure against the first and second storage chambers 101 and 103, thereby pressurizing contents therein to flow into the mixing chamber 105.

In other implementations, the user interface 760 may include a push button, a rotating knob, a gear drive, a cam assembly, or other mechanism that applies force or pressure, either directly or indirectly, to the storage chambers 101 and 103, which force or pressure causes the contents of the storage chambers 101 and 103 to flow into the mixing chamber 105 and causes the sufficiently mixed contents to then flow out of the dispensing nozzle 106.

In various embodiments, any or all of the housing 761, the storage chambers 101 and 103, the removable end-cap 780, and/or the mixing chamber 105 may include a viewing window. That is, any or all of the housing 761, the storage chambers 101 and 103, the removable end-cap 780, and/or the mixing chamber 105 be formed of a transparent or semi-transparent material or may include a transparent or semi-transparent portion through which their current contents are visible. For example, the transparent material may be a clear plastic or other suitable see-through material which allows a user to view the contents that are inside the housing 761, the storage chambers 101 and 103, the removable end-cap 780, and/or the mixing chamber 105.

## Claims

1. An oral care product applicator (500, 700), comprising:
a housing (531, 761) comprising a volume (530) for receiving a dispenser (100, 200, 300, 400, 600);
a dispenser (100, 200, 300, 400, 600) disposed in the housing (531, 761), and
an actuator for manipulating the dispenser (100, 200, 300, 400, 600),
wherein the dispenser comprises:
at least two storage chambers (101, 103),
at least one seal (102, 104) that keeps contents stored in the at least two storage chambers (101, 103) from exiting the dispenser,
a mixing chamber (105), connected to the at least two storage chambers (101, 103), that receives and sufficiently mixes contents from the at least two storage chambers (101, 103), and
a dispensing nozzle (106) in fluid communication with the mixing chamber (105),
**characterized in that**
at least one of the at least two storage chambers (101, 103) comprises an anchor portion (113) that engages with the housing (531, 761), wherein the anchor portion (113) comprises a surface (115) and a slot (117) formed through the surface (115), and wherein the dispensing nozzle (106) is positioned at one end of the applicator (500, 700) and the anchor portion (113) is positioned at another end of the applicator.

2. The oral care product applicator of claim 1, wherein the at least one seal (102, 104) is disposed between the mixing chamber (105) and the at least two storage chambers (101, 103).

3. The oral care product applicator of claim 1, wherein the at least two storage chambers (101, 103) comprise a sidewall; and wherein the seal (102, 104) comprises a material that fractures upon exposure to a pressure that is less than a pressure required to fracture the sidewall of the at least two storage chambers (101, 103).

4. The oral care product applicator of claim 1, wherein the mixing chamber (105) comprises a manifold comprising:
at least two inlets (109, 107); and
a mixing volume (306) comprising:
a plurality of baffles defined by a plurality of sidewalls (302, 304, 308, 309) extending from an inner surface of the mixing chamber (105).

5. The oral care product applicator of claim 1, wherein the dispensing nozzle (106) extends from the mixing chamber (105) and comprises a snap-off tip (111).

6. The oral care product applicator of claim 1, wherein the contents comprise first contents disposed in a first one of the at least two storage chambers (101, 103) and second contents disposed in a second one of the at least two storage chambers (101, 103); and wherein at least one of the first and the second contents comprise an oral care product.

7. The oral care product applicator of claim 1, wherein the at least one seal (102, 104) keeps contents stored in the at least two storage chambers (101, 103) separate during storage.

8. The oral care product applicator of claim 1, wherein the anchor portion (113) engages with a pin of the applicator (500, 700) to capture and hold the dispenser (100, 200, 300, 400, 600) in place.

9. The oral care product applicator of claim 1, wherein the actuator comprises at least one roller (420) in mechanical communication with at least one of the at least two storage chambers (101, 103).

10. The oral care product applicator of claim 1, wherein the actuator comprises at least one of a group consisting of a clamping platen, a rotating element and a piston, and wherein the actuator is in mechanical communication with at least one of the at least two storage chambers (101, 103).

11. The oral care product applicator of claim 1, wherein each of the at least two storage chambers (101, 103) comprise separate sachets, the mixing chamber (105) comprises at least two inlets (109, 107), and
each of the separate sachets connect to a respective one of the at least two inlets (109, 107) of the mixing chamber (105).

12. The oral care product applicator of claim 1, wherein the actuator is controlled by a user interface (760).

13. The oral care product applicator of claim 12, wherein the user interface (760) comprises at least one of a group comprising a sliding button (765), a push button and a rotating knob; and
wherein the user interface (760) communicates with at least one of a group comprising a ratchet (767), a gear drive, a cam assembly and a piston.

14. The oral care product applicator of claim 1, wherein at least one of the at least two storage chambers (101, 103), the housing, and the mixing chamber (105) comprise a transparent portion.

15. The oral care product applicator of claim 1, wherein the at least one seal (102, 104) comprises a frangible seal that fractures from pressure caused by the actuator.

## Patentansprüche

1. Mundpflegemittelapplikator (500, 700), umfassend:
ein Gehäuse (531, 761), das ein Volumen (530) zum Aufnehmen eines Spenders (100, 200, 300, 400, 600) umfasst;
einen Spender (100, 200, 300, 400, 600), der im Gehäuse (531, 761) angeordnet ist, und
einen Bedienteil zum Manipulieren des Spenders (100, 200, 300, 400, 600), wobei der Spender umfasst:
mindestens zwei Vorratskammern (101, 103),
mindestens eine Dichtung (102, 104), die in den mindestens zwei Vorratskammern (101, 103) aufbewahrte Inhalte davon abhält, aus dem Spender zu treten,
eine Mischkammer (105), die mit den mindestens zwei Vorratskammern (101, 103) verbunden ist, die Inhalte aus den mindestens zwei Vorratskammern (101, 103) aufnimmt und hinreichend mischt, und
eine Dosierdüse (106) in Fluidkommunikation mit der Mischkammer (105),
**dadurch gekennzeichnet, dass**
mindestens eine der mindestens zwei Vorratskammern (101, 103) einen Ankerabschnitt (113) umfasst, der in das Gehäuse (531, 761) eingreift, wobei der Ankerabschnitt (113) eine Oberfläche (115) und einen Schlitz (117) umfasst, der durch die Oberfläche (115) gebildet ist, und wobei die Dosierdüse (106) an einem Ende des Applikators (500, 700) positioniert ist und der Ankerabschnitt (113) an einem anderen Ende des Applikators positioniert ist.

2. Mundpflegemittelapplikator nach Anspruch 1, wobei die mindestens eine Dichtung (102, 104) zwischen der Mischkammer (105) und den mindestens zwei Vorratskammern (101, 103) angeordnet ist.

3. Mundpflegemittelapplikator nach Anspruch 1, wobei die mindestens zwei Vorratskammern (101, 103) eine Seitenwand umfassen; und
wobei die Dichtung (102, 104) ein Material umfasst, das bei Exposition gegenüber einem Druck bricht, der unter einem Druck liegt, der erforderlich ist, um die Seitenwand der mindestens zwei Vorratskammern (101, 103) zu brechen.

4. Mundpflegemittelapplikator nach Anspruch 1, wobei die Mischkammer (105) einen Verteiler umfasst, umfassend:
mindestens zwei Einlässe (109, 107); und
ein Mischvolumen (306), umfassend:
eine Mehrzahl von Leitteilen, die durch eine Mehrzahl von Seitenwänden (302, 304, 308, 309) definiert sind, die von einer Innenfläche der Mischkammer (105) verlaufen.

5. Mundpflegemittelapplikator nach Anspruch 1, wobei die Dosierdüse (106) von der Mischkammer (105) verläuft und eine abbrechbare Spitze (111) umfasst.

6. Mundpflegemittelapplikator nach Anspruch 1, wobei die Inhalte einen ersten Inhalt, der in einer ersten der mindestens zwei Vorratskammern (101, 103) angeordnet ist, und einen zweiten Inhalt umfassen, der in einer zweiten der mindestens zwei Vorratskammern (101, 103) angeordnet ist; und wobei mindestens entweder der erste und/oder der zweite Inhalt ein Mundpflegemittel umfasst bzw. umfassen.

7. Mundpflegemittelapplikator nach Anspruch 1, wobei die mindestens eine Dichtung (102, 104) in den mindestens zwei Vorratskammern (101, 103) aufbewahrte Inhalte während der Aufbewahrung getrennt hält.

8. Mundpflegemittelapplikator nach Anspruch 1, wobei der Ankerabschnitt (113) in einen Stift des Applikators (500, 700) eingreift, um den Spender (100, 200, 300, 400, 600) zu erfassen und in Position zu halten.

9. Mundpflegemittelapplikator nach Anspruch 1, wobei der Bedienteil mindestens eine Rolle (420) in mechanischer Verbindung mit mindestens einer der zwei Vorratskammern (101, 103) umfasst.

10. Mundpflegemittelapplikator nach Anspruch 1, wobei der Bedienteil mindestens eines aus einer Gruppe umfasst, die aus einer Klemmplatte, einem Drehelement und einem Kolben besteht, und wobei der Bedienteil in mechanischer Verbindung mit mindestens einer der zwei Vorratskammern (101, 103) steht.

11. Mundpflegemittelapplikator nach Anspruch 1, wobei jede der mindestens zwei Vorratskammern (101, 103) separate Beutel umfasst, die Mischkammer (105) mindestens zwei Einlässe (109, 107) umfasst und
jeder der separaten Beutel mit einem jeweiligen der mindestens zwei Einlässe (109, 107) der Mischkammer (105) verbunden sind.

12. Mundpflegemittelapplikator nach Anspruch 1, wobei der Bedienteil durch eine Benutzerschnittstelle (760) gesteuert wird.

13. Mundpflegemittelapplikator nach Anspruch 12, wobei die Benutzerschnittstelle (760) mindestens einen aus einer Gruppe umfasst, die einen Schiebeknopf (765), einen Druckknopf und einen Drehknopf umfasst; und
wobei die Benutzerschnittstelle (760) mit mindestens einem aus einer Gruppe kommuniziert, die eine Rastung (767), ein Zahnradgetriebe, eine Nockenanordnung und einen Kolben umfasst.

14. Mundpflegemittelapplikator nach Anspruch 1, wobei mindestens eine der mindestens zwei Vorratskammern (101, 103), das Gehäuse und die Mischkammer (105) einen transparenten Abschnitt umfassen.

15. Mundpflegemittelapplikator nach Anspruch 1, wobei die mindestens eine Dichtung (102, 104) eine zerbrechliche Dichtung umfasst, die durch den vom Bedienteil verursachten Druck bricht.

## Revendications

1. Applicateur de produit d'hygiène buccale (500, 700), comprenant :
un boîtier (531, 761) comprenant un volume (530) pour recevoir un distributeur (100, 200, 300, 400, 600) ;
un distributeur (100, 200, 300, 400, 600) disposé dans le boîtier (531, 761), et
un actionneur pour manipuler le distributeur (100, 200, 300, 400, 600), le distributeur comprenant :
au moins deux chambres de stockage (101, 103),
au moins un joint (102, 104) qui empêche des contenus stockés dans les au moins deux chambres de stockage (101, 103) de sortir du distributeur,
une chambre de mélange (105), reliée aux au moins deux chambres de stockage (101, 103), qui reçoit et mélange suffisamment les contenus provenant des au moins deux chambres de stockage (101, 103), et
une buse de distribution (106) en communication fluidique avec la chambre de mélange (105),
**caractérisé par le fait que**
au moins une chambre parmi les au moins deux chambres de stockage (101, 103) comprend une partie d'ancrage (113) qui s'engage avec le boîtier (531, 761), la partie d'ancrage (113) comprenant une surface (115) et une fente (117) formée à travers la surface (115), et la buse de distribution (106) étant positionnée à une extrémité de l'applicateur (500, 700) et la partie d'ancrage (113) étant positionnée à une autre extrémité de l'applicateur.

2. Applicateur de produit d'hygiène buccale selon la revendication 1, dans lequel l'au moins un joint (102, 104) est disposé entre la chambre de mélange (105) et les au moins deux chambres de stockage (101, 103).

3. Applicateur de produit d'hygiène buccale selon la revendication 1, dans lequel les au moins deux chambres de stockage (101, 103) comprennent une paroi latérale ; et le joint (102, 104) comprend un matériau qui se fracture lors d'une exposition à une pression qui est inférieure à une pression requise pour fracturer la paroi latérale des au moins deux chambres de stockage (101, 103).

4. Applicateur de produit d'hygiène buccale selon la revendication 1, dans lequel la chambre de mélange (105) comprend un collecteur comprenant :
au moins deux entrées (109, 107) ; et
un volume de mélange (306) comprenant :
une pluralité de déflecteurs définis par une pluralité de parois latérales (302, 304, 308, 309) s'étendant à partir d'une surface interne de la chambre de mélange (105).

5. Applicateur de produit d'hygiène buccale selon la revendication 1, dans lequel la buse de distribution (106) s'étend à partir de la chambre de mélange (105) et comprend une pointe de rupture (111).

6. Applicateur de produit d'hygiène buccale selon la revendication 1, dans lequel les contenus comprennent un premier contenu disposé dans une première parmi les au moins deux chambres de stockage (101, 103) et un second contenu disposé dans une seconde parmi les au moins deux chambres de stockage (101, 103) ; et au moins un parmi les premier et second contenus comprend un produit d'hygiène buccale.

7. Applicateur de produit d'hygiène buccale selon la revendication 1, dans lequel l'au moins un joint (102, 104) maintient des contenus stockés dans les au moins deux chambres de stockage (101, 103) séparés pendant le stockage.

8. Applicateur de produit d'hygiène buccale selon la revendication 1, dans lequel la partie d'ancrage (113) s'engage avec une broche de l'applicateur (500, 700) pour capturer et maintenir le distributeur (100, 200, 300, 400, 600) en place.

9. Applicateur de produit d'hygiène buccale selon la revendication 1, dans lequel l'actionneur comprend au moins un rouleau (420) en communication mécanique avec au moins une parmi les au moins deux chambres de stockage (101, 103).

10. Applicateur de produit d'hygiène buccale selon la revendication 1, dans lequel l'actionneur comprend au moins un parmi un groupe constitué d'une platine de serrage, d'un élément rotatif et d'un piston, et l'actionneur est en communication mécanique avec au moins une parmi les au moins deux chambres de stockage (101, 103).

11. Applicateur de produit d'hygiène buccale selon la revendication 1, dans lequel chacune des au moins deux chambres de stockage (101, 103) comprend des sachets distincts, la chambre de mélange (105) comprend au moins deux entrées (109, 107), et chacun des sachets distincts est relié à une entrée respective parmi les au moins deux entrées (109, 107) de la chambre de mélange (105).

12. Applicateur de produit d'hygiène buccale selon la revendication 1, dans lequel l'actionneur est commandé par une interface utilisateur (760).

13. Applicateur de produit d'hygiène buccale selon la revendication 12, dans lequel l'interface utilisateur (760) comprend au moins un parmi un groupe constitué d'un bouton coulissant (765), d'un bouton-poussoir et d'un bouton rotatif ;
et l'interface utilisateur (760) communique avec au moins un parmi un groupe constitué d'un cliquet (767), d'un entraînement à engrenage, d'un ensemble came et d'un piston.

14. Applicateur de produit d'hygiène buccale selon la revendication 1, dans lequel au moins un parmi les au moins deux chambres de stockage (101, 103), le boîtier et la chambre de mélange (105) comprend une partie transparente.

15. Applicateur de produit d'hygiène buccale selon la revendication 1, dans lequel l'au moins un joint (102, 104) comprend un joint frangible qui se fracture en raison d'une pression causée par l'actionneur.
